# EUROPÄISCHE PATENTANMELDUNG

(11) **EP 3 241 588 A1**
(43) Veröffentlichungstag der Anmeldung: **08.11.2017**
(21) Anmeldenummer: 16168445.1
(22) Anmeldetag: 04.05.2016
(51) Int. Cl.: A62C 2/06, A62C 2/10, B32B 5/06, B32B 5/26

(54) **BRANDABWEHRENDER BZW. FEUERHEMMENDER MEHRSCHICHTAUFBAU SOWIE MODUL DIESEN BRANDABWEHRENDEN BZW. FEUERHEMMENDEN MEHRSCHICHTAUFBAU ENTHALTEND**

(71) Anmelder: Frenzelit Werke GmbH, 95460 Bad Berneck i. F. (DE)
(72) Erfinder: SCHREI, Reiner, 96123 Litzendorf, Naisa (DE); GOLAB, Anna, 95445 Bayreuth (DE); JAHN, Peter, 95488 Eckersdorf (DE); WIRTH, Wolfgang, 95445 Bayreuth (DE)
(74) Vertreter: Becker Kurig Straus

(57) **Zusammenfassung**

Die vorliegende Erfindung betrifft einen feuerhemmenden Mehrschichtaufbau (2). Der Mehrschichtaufbau (2) umfasst ein erstes textiles Flächengebilde (10), das bis mindestens 800°C temperaturfest ist, eine erste Schicht (12), die ein intumeszierendes Material umfasst; und ein zweites textiles Flächengebilde (14), wobei die erste Schicht (10) zwischen dem ersten und dem zweiten textilen Flächengebilde (10, 14) angeordnet ist. Der feuerhemmende Mehrschichtaufbau umfasst weiterhin mindestens eine Verbindung mit einem ersten Verbindungsfaden (20, 22, 24), der bis mindestens 800°C temperaturfest ist, der das erste textile Flächengebilde (10), die erste Schicht (12) und das zweite textile Flächengebilde (14) miteinander verbindet, wobei die mindestens eine Verbindung den ersten Verbindungsfaden (20, 22, 24) in jeweils mindestens eine Schlaufe (36) legt, und wobei die mindestens eine Verbindung einen Höchstabstand zwischen dem ersten und dem zweiten textilen Flächengebilde (10, 14) im Bereich der Verbindung auf mindestens das Fünffache der Dicke der ersten Schicht (12) festlegt.

## Beschreibung

### Hintergrund der Erfindung

### Gebiet der Erfindung

Die vorliegende Erfindung betrifft einen brandabwehrenden bzw. feuerfesten bzw. feuerhemmenden Mehrschichtaufbau, eine Brandschutzmatte bzw. ein Brandschutzmodul diesen feuerhemmenden Mehrschichtaufbau enthaltend und ein Verfahren und eine Vorrichtung zu dessen Herstellung. Insbesondere werden gemäß der Erfindung Wärmebrücken zwischen den Außenseiten des feuerhemmenden Mehrschichtaufbaus reduziert. Weiterhin umfasst die vorliegende Erfindung die Verwendung der feuerhemmenden Module bzw. Schichtelemente bzw. Modulelemente der vorliegenden Erfindung zur Herstellung eines Feuerschutzvorhangs.

### Beschreibung des Standes der Technik

Textile Feuerschutzvorhänge, vor allem isolierend wirkende Vorhänge, erfreuen sich im Bereich des baulichen Brandschutzes einer steigenden Beliebtheit, da sie leicht, wirtschaftlich und platzsparend sind.

Solche Vorhänge sind z.B. aus der WO2008/154906 oder der DE19655253 bekannt. Gemäß dem Stand der Technik wird ein intumeszierendes Material, bevorzugt Blähgraphit, zwischen zumindest 2 Lagen Material eingebracht. Im Brandfall bewirkt das intumeszierende Material ein Aufblähen des Vorhangs durch Wärmeeinwirkung bei Temperaturen zwischen 140°C und 230°C und damit eine größere Dicke und damit, aufgrund der niedrigen Wärmeleitfähigkeiten der verwendeten Materialien, eine gute thermische Isolierung. Die entstehenden Partikel bzw. Flocken neigen aber dazu sich zu setzten, umso mehr, da während eines Brandes auf den Vorhang, wie bei einem Segel, wechselnde mechanische Belastungen wirken. Dies hat zur Folge, dass das expandierte Material, der Schwerkraft folgend, nach unten wandert und im oberen Bereich die Isolationswirkung des Vorhangs massiv verschlechtert wird.

Bei der EP 2 158 007 A1 wird das intumeszierende Material durch Kammern am Herabrieseln gehindert und an Ort und Stelle gehalten, wodurch die Isolationswirkung verbessert wird. Allerdings gibt es besonders an den Nahtstellen zwischen den Kissen nach wie vor Wärmebrücken, die die Isolationswirkung des Vorhangs verschlechtern und im schlimmsten Fall für einen raschen Feuerdurchbruch oder eine schnellere Temperaturerhöhung auf der Kaltseite sorgen können. Folge ist eine niedrigere Schutzstufe des Materials.

### Kurze Beschreibung der Erfindung

Die vorliegende Erfindung dient dazu, die Nachteile der bekannten feuerhemmenden Vorhänge abzumindern. Die Erfindung dient insbesondere dazu dem breiten Markt der Systemanbieter einen Mehrschichtaufbau zur Verfügung zu stellen mit folgenden Eigenschaften:
- Verhinderung des Flammendurchtritts bzw. einer Temperaturerhöhung auf der Kaltseite von mehr als 140 °K,
- dünnem Aufbau,
- einer Vervielfachung der ursprünglichen Dicke im Brandfall,
- Verschiedene Schutzstufen durch Hintereinanderschaltung mehrerer Grundelemente,
- sehr niedrige Wärmeleitfähigkeit,
- Verhinderung des Durchtritts heißer Brandgase,
- Verhinderung der Demobilisierung des Dämmschichtbildners,
- Einfacher Flächenaufbau durch Vervielfältigung eines Grundelements,
- Wirtschaftlichkeit durch Serienproduktion.

Diese Ziele werden erfindungsgemäß durch die Gegenstände der beigefügten Ansprüche 1, 13 und 14 gelöst. Vorteilhafte Ausführungsformen werden in den abhängigen Ansprüchen bereitgestellt.

Mögliche Ausgestaltungen der Erfindung betreffen außerdem ein System, dass zumindest zwei gegenüberliegende Lagen Material und zumindest ein expandierendes Material sowie zumindest ein Fadensystem aufweist, welches die Expansion räumlich definiert begrenzt und Zugspannungen in der Dickenrichtung aufnimmt um in der Folge dem expandierten Material so viel Gegendruck entgegen zu setzten, damit dieses an Ort und Stelle verbleibt, wobei optional ist:
- dass es sich bei den Materialien um homogene Flächengebilde und oder um Werkstoffverbunde handelt.
- dass dem erfindungsgemäßen System weitere Lagen hinzugefügt werden.
- dass es sich bei den hinzugefügten Materialien auch um Folien aus Metallen bevorzugt Edelstahl und NE-Metallen bevorzugt Aluminium handelt
- dass es sich bei dem Fadensystem um einen Kettenstich handelt, der durch eine geeignete Vorrichtung den notwendigen Bedarf an zusätzlichem Nahtmaterial bereitstellt.
- dass es sich bei dem Fadensystem um eine Schlaufe durch das Material oder Materialverbund mit Knoten handelt, wobei die Schlaufe die nötige Menge Nahtmaterial beinhaltet.
- dass es sich bei dem Fadensystem aus einer Kombination von 2 Nähten handelt. Eine mit einem schmelzbaren Garn / Faden und ein Zweites mit einem nicht schmelzbaren Garn / Faden handelt, wobei durch den schmelzbaren Faden der notwendige Bedarf an zusätzlichem Nahtmaterial auf einer Seite des Systems durch eine Steppstichnaht ausgebildet und fixiert wird. (siehe Bilder Ordner Naht gem. Anspruch 6)
- dass das Fadensystem in vertikaler und oder horizontaler Richtung des Systems verläuft.
- dass das blähfähige Material als Basis anorganischer oder organischer Natur ist, bevorzugt organischer Natur, insbesondere Blähgrafit.
- dass das intumeszierende Material in Form einer trockenen Beschichtung zumindest auf 1 Flächenmaterial, dem anderen Material zugewandt, angeordnet ist.
- dass es sich bei den flächigen Materialien um Nadelvlies handelt.
- dass das Vlies aus E-Glas, aus hochtemperaturbeständigen HT Glasfasern aus Silikatfasern oder aus deren Mischungen besteht.
- dass das Vlies chemisch so behandelt ist, dass unter hoher Temperatur die Viskosität so hoch ist, dass ein Ablaufen verhindert wird.
- dass es sich bei den flächigen Materialien um anorganische Gewebe handelt, die aus Festigkeitsgründen mit Draht verstärkt sein können.
- dass es sich bei dem Garn für das Fadensystem um ein drahtverstärktes Material handelt. Bevorzugt 1.4841 aber auch Nickel basierte Werkstoffe wie 2.4869
- dass es sich bei dem Garn für das Fadensystem um nichtmetallische Werkstoffe wie Nextel™ oder Quartzel™ handelt
- dass das System als solches als vorkonfektionierte Rollenware geliefert wird und der Kunde sich die benötigte Fläche einfach herstellen kann.
- dass dem System auf der Außenseite zusätzliche Lagen hinzugefügt werden, die nicht mit diesem verbunden sind.

Es werden erfindungsgemäß mindestens drei Schichten bereitgestellt, wobei die mittlere Schicht ein intumeszierendes Material umfasst. Durch einen ersten (feuerfesten) Verbindungsfaden werden die drei Schichten so verbunden, wobei Schlaufen des ersten Verbindungsfadens ein Fadenreservoir bilden. Bläht sich im Brandfall die mittlere intumeszierende Schicht auf, können sich die Schichten im Bereich des ersten Verbindungsfadens entsprechend dem Fadenreservoir voneinander entfernen. Dadurch wird zum einen verhindert, dass das intumeszierende Material einfach zwischen den Schichten herabrieselt, da der Verbindungsfaden Engstellen bildet, an denen sich das intumeszierende Material verdichtet. Zum anderen liegt im Bereich des ersten Verbindungsfadens genug intumeszierendes Material vor, um eine Wärmebrücke zwischen den Außenschichten zu verhindern, wie sie im Stand der Technik auftreten. Das intumeszierende Material baut zwischen den beiden äußeren Schichten einen Druck auf, wodurch sich das intumeszierende Material verdichtet und sich dadurch selbst am Herabrieseln hindert. Im Stand der Technik wurden Wärmebrücken gebildet, wenn die Schichten einfach aufeinander aufliegend hitzebeständig vernäht werden, um Kissen für das intumeszierende Material zu bilden.

Dementsprechend stellt die vorliegende Erfindung einen feuerhemmenden Mehrschichtaufbau bereit, der ein erstes textiles Flächengebilde, das bis mindestens 800°C temperaturfest ist, eine erste Schicht, die ein intumeszierendes Material umfasst und ein zweites textiles Flächengebilde bereit. Die erste Schicht ist zwischen dem ersten und dem zweiten textilen Flächengebilde angeordnet. Der feuerhemmende Mehrschichtaufbau der vorliegenden Erfindung umfasst weiterhin mindestens eine Verbindung mit einem ersten Verbindungsfaden, der bis mindestens 800°C temperaturfest ist. Der erste Verbindungsfaden verbindet das erste textile Flächengebilde, die erste Schicht und das zweite textile Flächengebilde miteinander, wobei die mindestens eine Verbindung den ersten Verbindungsfaden in jeweils mindestens eine Schlaufe legt, und wobei die mindestens eine Verbindung einen Höchstabstand zwischen dem ersten und dem zweiten textilen Flächengebilde im Bereich der Verbindung auf mindestens das Fünffache der Dicke bevorzugt mindestens das Zehnfache der Dicke der ersten Schicht festlegt. In einer optionalen Ausführungsform wird der Höchstabstand zwischen dem ersten und dem zweiten textilen Flächengebilde im Bereich der Vernähung auf höchstens das Sechzigfache der Dicke der ersten Schicht festlegt. In einer weiteren optionalen Ausführungsform wird der Höchstabstand zwischen dem ersten und dem zweiten textilen Flächengebilde im Bereich der Vernähung zwischen dem 10- und 40-fachen bevorzugt zwischen dem 15- und 35-fachen und weiter bevorzugt zwischen dem 20- und 30-fachen der Dicke der ersten intumeszierenden Schicht festlegt.

In einer Ausführungsform des feuerhemmenden Mehrschichtaufbaus der vorliegenden Erfindung ist die erste Schicht als eine Beschichtung auf einer Seite des ersten textilen Flächengebildes und/oder des zweiten textilen Flächengebildes bereitgestellt. Damit kann sich ein Verbundmaterial aus einem tragfähigen textilen Flächengebilde das mit dem Material der intumeszierenden Schicht beschichtet ist ergeben. Ein solcher Aufbau vereinfacht die Herstellung des feuerhemmenden Mehrschichtaufbaus, da dann weniger Schichten miteinander verbunden werden müssen

In einer Ausführungsform des feuerhemmenden Mehrschichtaufbaus der vorliegenden Erfindung umfasst der feuerhemmende Mehrschichtaufbau weiterhin wenigstens ein Befestigungselement, das das erste textile Flächengebilde, die erste Schicht und das zweite textile Flächengebilde miteinander verbindet. In einer beispielhaften Ausführungsform ist das wenigstens eine Befestigungselement nicht temperaur- bzw. feuerfest ausgeführt, um ein aufblähen der intumeszierenden Schicht zu ermöglichen.

In einer Ausführungsform des feuerhemmenden Mehrschichtaufbaus der vorliegenden Erfindung umfasst das Befestigungselement einen zweiten Verbindungsfaden, der das erste textile Flächengebilde, die erste Schicht und das zweite textile Flächengebilde aufliegend miteinander verbindet, wobei der zweite Verbindungsfaden eine Temperaturfestigkeit aufweist, die im Bereich der Intumeszenztemperatur des intumeszierenden Materials der ersten Schicht liegt. Es sei angemerkt, dass im Kontext der vorliegenden Erfindung jedwedes Befestigungselement verwendet werden kann, dass eine entsprechende Temperaturfestigkeit aufweist, um den Effekt zu erzielen, dass sich die im Wesentlichen aufliegende Verbindung der Schichten löst, sobald die Intumeszenztemperatur des intumeszierenden Materials erreicht wird. Darunter fallen z.B. auch Verbindungen durch Klammern, Bänder, Verschraubungen oder Nieten aus einem geeigneten Material (wobei Kunststoffe bevorzugt sind).

In einer Ausführungsform des feuerhemmenden Mehrschichtaufbaus der vorliegenden Erfindung bildet die mindestens eine Verbindung eine erste Naht, die das erste textile Flächengebilde, die erste Schicht und das zweite textile Flächengebilde verbindet, und der zweite Verbindungsfaden bildet eine zweite Naht, die parallel zu der ersten Naht verläuft und die durch den ersten Verbindungsfaden gebildeten Schlaufen an dem Mehrschichtaufbau befestigt. In einer Ausführungsform des feuerhemmenden Mehrschichtaufbaus der vorliegenden Erfindung können die mindestens eine Verbindung zusammen mit der zweiten Naht eine Verbundnaht bilden, wobei der zweite Verbindungsfaden die Schlaufen des ersten Verbindungsfadens der mindestens einen ersten Verbindung festlegt bzw. befestigt.

In einer Ausführungsform des feuerhemmenden Mehrschichtaufbaus der vorliegenden Erfindung umfasst das Befestigungselement eine Haftschicht, die zwischen wenigstens zwei benachbarte des ersten textilen Flächengebildes, der ersten Schicht und des zweiten textilen Flächengebildes eingefügt ist und diese miteinander verklebt. Die Haftschicht kann anstatt des oben beschriebenen zweiten Verbindungsfadens vorgesehen sein. Im Gegensatz zu dem zweiten Verbindungsfaden muss die Haftschicht keine spezifische Temperaturfestigkeit aufweisen, da sich die Haftschicht automatisch von dem Schicht mit dem intumeszierenden material löst bzw. einer Ausdehnung der intumeszierenden Schicht keinen bzw. keinen erheblichen Widerstand entgegensetzt.

In einer Ausführungsform des feuerhemmenden Mehrschichtaufbaus der vorliegenden Erfindung bildet die mindestens eine Verbindung eine Naht und die Schlaufen des ersten Verbindungsfadens sind durch ein Klebeband bzw. Klebestreifen an dem Mehrschichtaufbau befestigt. In dieser Ausführungsform kann durch das Klebeband sichergestellt werden, dass sich die Schlaufen der Fadenreserve bei einer Herstellung und bei einem Testbetrieb von Feuerschutzvorhängen nicht verfangen können. Dadurch kann sichergestellt werden, dass die Naht bzw. die Verbindungen im Betrieb oder bei der Herstellung von Feuerschutzvorhängen nicht beschädigt werden.

In einer Ausführungsform des feuerhemmenden Mehrschichtaufbaus der vorliegenden Erfindung umfasst das erste textile Flächengebilde einen Vliesstoff mit Mineralfasern. Der Fließstoff wird hier an der Seite des späteren Vorhangs eingesetzt, der in Richtung der Flammen liegt. Bevorzugt wird der Vliesstoff weiter durch eine zusätzliche Lage abgedeckt, um z.B. Gasdurchtritt oder Wärmeeinstrahlung zu mindern.

In einer Ausführungsform des feuerhemmenden Mehrschichtaufbaus der vorliegenden Erfindung ist der Mehrschichtaufbau zur Fertigung eines Feuerschutzvorhangs geeignet und das zweite textile Flächengebilde ist ein reißfestes Gewebe, das geeignet ist das Gewicht des Feuerschutzvorhangs bis zu einer Temperatur von mindestens 200°C zu tragen.

In einer Ausführungsform des feuerhemmenden Mehrschichtaufbaus der vorliegenden Erfindung umfasst der Mehrschichtaufbau mindestens ein Drahtgeflecht oder ein Drahtgitter, das mit dem ersten textilen Flächengebilde, der ersten Schicht und/oder dem zweiten textilen Flächengebilde verbunden ist oder darin eingearbeitet ist.

In einer Ausführungsform des feuerhemmenden Mehrschichtaufbaus der vorliegenden Erfindung umfasst der erste Verbindungsfaden einen Draht oder einen Keramikfaden.

In einer Ausführungsform des feuerhemmenden Mehrschichtaufbaus der vorliegenden Erfindung bildet jede der mindestens einen Verbindung eine geschlossene Schlaufe. Diese Ausführungsform betrifft eine Schlaufe durch das Material oder Materialverbund mit geeignetem Ringschluss wie z.B. Knoten, Haken etc., bei der eine einzelne Verbindung eine geschlossene Fadenschlaufe bildet, deren Enden auf einer Seite der textilen Flächengebilde miteinander verbunden, z.B. verknotet sind. Eine solche Schlaufe hat den großen Vorteil, dass sofern ein Draht als Nähmaterial verwendet wird, immer nur einzelne Thermobrücken und keine linearen Thermobrücken entstehen. Weiterhin kann die Gesamtzahl der Thermobrücken bei einer entsprechenden Verteilung der einzelnen Schlaufen kleiner gehalten werden als im Fall einer durchgehenden Naht. Dies ermöglicht eine Materialeinsparung.

Die vorliegende Erfindung stellt außerdem ein Modul bzw. ein Schichtenelement bzw. ein Modulelement bereit, das den feuerhemmenden Mehrschichtaufbau gemäß einer der vorstehenden Ausführungsformen umfasst. Das Modul dient generell zur Herstellung von Feuerschutzvorhängen, ohne ausschließlich darauf einzuschränken. Ein Modul der vorliegenden Erfindung kann beispielsweise auch für andere Feuerschutztextilien wie etwa Feuerhemmende Ummantelungen oder Zwischenbodeneinlagen verwendet werden. Zur Herstellung eines Feuerschutzvorhangs aus den Modulen, werden die tragenden Schichten der Module mit einem hitzebeständigen Garn oder Draht verbunden.

Die erste intumeszierende Schicht des feuerhemmenden Mehrschichtaufbaus des Moduls ist auf dem ersten oder dem zweiten textilen Flächengebilde aufgebracht, wobei das erste und das zweite textile Flächengebilde im Wesentlichen eine gleiche Breite aufweisen, wobei das erste und das zweite textile Flächengebilde versetzt zueinander angeordnet sind. Das zweite oder das erste textile Flächengebilde, auf das die erste Schicht nicht aufgebracht ist, weist eine Klebeschicht auf, wobei die Klebeschicht im Randbereich jeweils mit Abdeckstreifen versehen ist, und wobei die Klebeschicht zwischen den Randbereichen mit der ersten Schicht verklebt ist. Durch die Klebeschicht können mehrere Module an den durch die Versetzung der Schichten hervorstehenden Bereich verklebt werden. In einer bevorzugten Ausführungsform können die Module zusätzlich zu oder anstatt der Verklebung auch an den tragenden Schichten mit einem hitzebeständigen Garn vernäht werden.

In einer Ausführungsform ist die erste intumeszierende Schicht auf dem ersten textilen Flächengebilde aufgebracht. Das erste und das zweite textile Flächengebilde weisen im Wesentlichen eine gleiche Breite auf. Das erste und das zweite textile Flächengebilde sind versetzt zueinander angeordnet. Es ist auf dem ersten textilen Flächengebilde eine Klebeschicht vorgesehen. Die Klebeschicht ist im Randbereich jeweils mit Abdeckstreifen versehen. Die Klebeschicht verklebt zwischen den Randbereichen das erste textile Flächengebilde mit dem zweiten textilen Flächengebilde bzw. mit der ersten Schicht. Durch diesen Aufbau liegt das zweite textile Flächengebilde an den Rändern frei und jeweils zwei Module können beispielsweise durch normale Steppnähte mit einem (temperaurbeständigen) Faden überlappend miteinander vernäht werden. Dadurch lassen sich einfach aus den Modulen größeren Feuerschutzvorhänge erstellen. Nachdem die Module durch das Vernähen der jeweiligen Ränder miteinander tragfähig verbunden sind, können die Abdeckstreifen von der Klebeschicht der zweiten textilen Flächengebilde entfernt werden, und über die Nahtstellen angrenzend oder Überlappend miteinander verklebt werden.

Die vorliegende Erfindung stellt außerdem einen Feuerschutzvorhang bereit, der eine erste Flächenware mit dem feuerhemmenden Mehrschichtaufbau gemäß einer der vorstehenden Ausführungsformen und eine zweite Flächenwäre mit dem feuerhemmenden Mehrschichtaufbau gemäß einer der vorstehenden Ausführungsformen umfasst, wobei die erste und die zweite Flächenware derart miteinander verbunden sind, dass die ersten textilen Flächengebilde der ersten und der zweiten Flächenware außen liegen. Optional wird zwischen den feuerhemmenden Mehrschichtaufbauten eine Aluminiumfolie als Strahlungsbarriere angeordnet. Weiter wird weiter bevorzugt außen über dem jeweils ersten textilen Flächengebilde ein weiteres textiles Flächengebilde angeordnet um das erste textile Flächengebilde gegen mechanische Beschädigungen zu schützen. Dies ist vor allem für den Fall vorgesehen, dass das erste textile Flächengebilde als Glas- oder Mineralfaservlies ausgeführt ist.

In einer besonders bevorzugten Ausführungsform des Feuerschutzvorhangs der vorliegenden Erfindung erfüllt der Feuerschutzvorhang mindestens die Erfordernisse entsprechend der Klassifikation EI 30 der Norm DIN EN 13501-2 bzw. 3 für nicht tragende Innenwände.

Die vorliegende Erfindung stellt ebenfalls ein Verfahren zur Herstellung eines feuerhemmenden Mehrschichtaufbaus bereit. Das Verfahren umfasst das Bereitstellen eines ersten textilen Flächengebildes, das bis mindestens 800°C temperaturfest ist, das Bereitstellen einer ersten Schicht, die ein intumeszierendes Material umfasst und das Bereitstellen eines zweiten textilen Flächengebildes, wobei die erste Schicht zwischen dem ersten und dem zweiten textilen Flächengebilde angeordnet wird. Das Verfahren umfasst außerdem das Bereitstellen eines ersten Verbindungsfadens, der bis mindestens 800°C temperaturfest ist und das Verbinden des ersten textilen Flächengebildes, der ersten Schicht und der zweiten textilen Flächengebildes, mit mindestens einer Verbindung, wobei der erste Verbindungsfaden bei jeder der mindestens einen Verbindung in Schlaufen vorliegt, und wobei jede der mindestens einen Verbindung einen Höchstabstand zwischen dem ersten und dem zweiten textilen Flächengebilde im Bereich der Verbindung auf mindestens das Fünffache der Dicke der ersten Schicht festlegt. In einer optionalen Ausführungsform wird der Höchstabstand zwischen dem ersten und dem zweiten textilen Flächengebilde im Bereich der Verbindung auf höchstens das Sechzigfache der Dicke der ersten Schicht festlegt bzw. auf höchstens das 120-fache im Falle eines fertigen Schutzmoduls/Schutzvorhangs mit doppelten Mehrschichtaufbau.

In einer Ausführungsform des Verfahrens der vorliegenden Erfindung umfasst der Schritt des Bereitstellens der ersten Schicht ein Beschichten der ersten Schicht auf einer Seite des ersten textilen Flächengebildes und/oder des zweiten textilen Flächengebildes.

In einer Ausführungsform des Verfahrens der vorliegenden Erfindung umfasst das Verfahren weiterhin das Bereitstellen eines Befestigungselements und das Verbinden des ersten textilen Flächengebildes, der ersten Schicht und des zweiten textilen Flächengebildes mit dem Befestigungselement, sodass das erste textile Flächengebilde, die erste Schicht und das zweite textile Flächengebilde aufeinanderliegen.

In einer Ausführungsform des Verfahrens der vorliegenden Erfindung umfasst das Befestigungselement einen zweiten Verbindungsfaden, der das erste textile Flächengebilde, die erste Schicht und das zweite textile Flächengebilde miteinander verbindet, wobei der zweite Verbindungsfaden eine Temperaturfestigkeit aufweist, die im Bereich der Starttemperatur des intumeszierenden Materials der ersten Schicht liegt.

In einer Ausführungsform des Verfahrens der vorliegenden Erfindung bildet die mindestens eine erste Verbindung eine erste Naht, die das erste textile Flächengebilde, die erste Schicht und das zweite textile Flächengebilde verbindet, und der zweite Verbindungsfaden bildet eine zweite Naht, die parallel zu der ersten Naht verläuft, wobei die zweite Naht die durch den ersten Verbindungsfaden gebildeten Schlaufen der ersten Naht an dem Mehrschichtaufbau befestigt, wobei das Verfahren bevorzugt weiter ein Flachlegen bzw. Flachkämmen/Flachbürsten der Schlaufen des ersten Verbindungsfadens umfasst. Dieses Flachlegen bzw. Flachkämmen/Flachbürsten kann durch eine weiche, raue Oberfläche geschehen, die nach dem Bilden der Naht über die entstandene(n) Schlaufe(n) streicht. Dabei wird sowohl die Schlaufe vollständig aus dem Verbundmaterial herausgezogen als auch in eine gewünschte Richtung gelegt. Durch die dadurch entstehende einheitliche Ausrichtung der Schlaufen auf der Oberfläche wird das darauf folgende Annähen bzw. Befestigen (z.B. mit einem Klebeband) der Schlaufen erleichtert.

In einer Ausführungsform des Verfahrens der vorliegenden Erfindung bildet die mindestens eine erste Verbindung eine erste Naht, die zusammen mit der zweiten Naht als Verbundnaht ausgeführt ist, wobei die erste Naht das erste textile Flächengebilde, die erste Schicht und das zweite textile Flächengebilde verbindet, und wobei der zweite Verbindungsfaden in der Verbundnaht die durch den ersten Verbindungsfaden gebildeten Schlaufen der ersten Naht an dem Mehrschichtaufbau befestigt.

In einer Ausführungsform des Verfahrens der vorliegenden Erfindung umfasst das Befestigungselement eine Haftschicht, und das Verfahren umfasst weiterhin ein Verkleben des ersten und/oder zweiten textilen Flächengebildes mit der der ersten Schicht, wobei bevorzugt Randbereiche der Klebeschicht mit einer Abdeckfolie versehen sind, und wobei weiter bevorzugt das erste und das zweite textile Flächengebilde gegeneinander versetzt angeordnet sind.

In einer Ausführungsform des Verfahrens der vorliegenden Erfindung umfasst das Verfahren weiterhin ein Befestigen der Schlaufen des ersten Verbindungsfadens indem diese mit einem Klebeband an dem Mehrschichtaufbau befestigt werden.

In einer Ausführungsform des Verfahrens der vorliegenden Erfindung umfasst das erste textile Flächengebilde einen Vliesstoff mit Mineralfasern.

In einer Ausführungsform des Verfahrens der vorliegenden Erfindung ist der durch das Verfahren gebildete Mehrschichtaufbau zur Fertigung eines Feuerschutzvorhangs geeignet, wobei das zweite textile Flächengebilde ein reißfestes Gewebe ist, das geeignet ist das Gewicht des Feuerschutzvorhangs bis zu einer Temperatur von mindestens 200°C zu tragen.

In einer Ausführungsform des Verfahrens der vorliegenden Erfindung umfasst der Mehrschichtaufbau weiterhin ein Drahtgeflecht oder ein Drahtgitter, das mit dem ersten textilen Flächengebilde, der ersten Schicht und/oder dem zweiten textilen Flächengebilde verbunden und/oder in dieses eingearbeitet ist.

In einer Ausführungsform des Verfahrens der vorliegenden Erfindung umfasst der erste Verbindungsfaden einen Draht oder einen Keramikfaden.

In einer Ausführungsform des Verfahrens der vorliegenden Erfindung bildet der erste Verbindungsfaden an der mindestens einen Verbindung eine geschlossene Schlaufe. Diese kann als Schlaufe durch das Material oder Materialverbund mit geeignetem Ringschluss wie z.B. Knoten, Haken etc. ausgeführt werden.

In einer Ausführungsform des feuerhemmenden Mehrschichtaufbaus, des Moduls, des Feuerschutzvorhangs oder des Verfahrens der vorliegenden Erfindung umfasst mindestens eines von dem ersten und dem zweiten textilen Flächengebilde mindestens eines, ausgewählt aus der Gruppe bestehend aus Glasfasergewebe, Kohlefasergewebe, Keramikfasergewebe, Siliziumfasergewebe, Karbonfasergewebe, Gewebe aus Siliziumdioxidfasern, Gewebe aus preoxidierten Polyacrylfasern (Preox) und Gewebe aus Metallfasern.

In einer Ausführungsform des feuerhemmenden Mehrschichtaufbaus, des Moduls, des Feuerschutzvorhangs oder des Verfahrens der vorliegenden Erfindung umfasst mindestens eines von dem ersten und dem zweiten textilen Flächengebilde ein Vlies, umfassend mindestens ein Material, ausgewählt aus der Gruppe, bestehend aus künstlichen mineralischen Fasern, Aramidfasern, thermoplastischen Fasern bzw. hochtemperaturthermoplastischen Fasern, Fasern aus thermisch behandelten Thermoplasten, sowie Glas- oder Steinwollefasern.

In einer Ausführungsform des feuerhemmenden Mehrschichtaufbaus, des Moduls, des Feuerschutzvorhangs oder des Verfahrens der vorliegenden Erfindung umfasst der erste Verbindungsfaden einen Metalldraht, Aramidgarn oder einen Keramikfaden. Der erste Verbindungsfaden ist bevorzugt bis mindestens 800°C temperaturbeständig.

In einer Ausführungsform des feuerhemmenden Mehrschichtaufbaus, des Moduls, des Feuerschutzvorhangs oder des Verfahrens der vorliegenden Erfindung umfasst der zweite Verbindungsfaden einen Wollfaden, Baumwollfaden oder Kunststofffaden. Der zweite Verbindungsfaden ist bevorzugt bis höchstens 800°C, noch bevorzugter bis höchstens 200°C temperaturbeständig.

In einer Ausführungsform des feuerhemmenden Mehrschichtaufbaus, des Moduls, des Feuerschutzvorhangs oder des Verfahrens der vorliegenden Erfindung umfasst das intumeszierende Material Blähgraphit.

Die vorliegende Erfindung stellt zudem eine Nähmaschine zum Erzeugen einer Abstandsnaht bereit, die ein Nähwerk, eine Legevorrichtung und eine Befestigungsvorrichtung umfasst. Das Nähwerk ist in der Lage eine Abstandsnaht herzustellen, wobei die Abstandsnaht freie Schlaufen umfasst, wobei die Schlaufen eine Fadenreserve darstellen, wobei die Schlaufen der Abstandsnaht bei Belastung zwischen zwei miteinander vernähten Lagen gezogen und gestreckt werden, wodurch die Abstandsnaht einen Abstand zwischen mindestens zwei miteinander vernähten textilen Flächengebilden definiert. Die Legevorrichtung legt die Schlaufen flach. Die Befestigungsvorrichtung befestigt die Schlaufen an mindestens einem der textilen Flächengebilde.

In einer Ausführungsform der Nähmaschine der vorliegenden Erfindung umfasst das Nähwerk einen Abstandhalter, durch den eine Länge der Schlaufen definiert wird (Keil, Förderband), und/oder umfasst die Legevorrichtung eine Bürste, ein Gebläse oder ein Band, das die Schlaufen in, schräg zu oder senkrecht zu einer Nährichtung flachlegt, und/oder befestigt die Befestigungsvorrichtung die Schlaufen durch eine zweite Naht und/oder einen Klebestreifen an mindestens einer der textilen Flächengebilde.

Das Nähwerk kann mit einem Abstandshalter versehen sein, der den Faden bei jedem Stich aufnimmt und in eine Schlaufe legt. Der Abstandshalter kann die Schlaufe nach jedem, nach jedem zweiten oder nach mehreren Stichen freigeben. Der Abstandshalter kann als Blech mit einer Abwurfvorrichtung ausgeführt sein, über das das Nähwerk den Faden bei jedem drüber führt. Es ist ebenfalls möglich den Abstandshalter bzw. den Schlaufenleger als Fadengreifer auszuführen der den Oberfaden greift und verhindert, dass er sich bei einem folgenden Stich festzieht. Es ist ebenfalls möglich den Faden an einem Haken aufzunehmen und später abzuwerfen. Die Maschine kann ebenfalls eine Legevorrichtung umfassen, die Legevorrichtung kann als eine Bürste, ein Gebläse oder ein Band ausgeführt sein, das jeweils die Schlaufen in eine Richtung senkrecht oder Schräg zur Nährichtung flachlegt oder ausrichtet. Die Befestigungsvorrichtung kann als zweites Nähwerk ausgeführt sein, mit dem die flachgelegten Schlaufen mit einem nicht temperaturbeständigen Faden an dem textilen Flächengebilde anliegend befestigt werden, sodass sie sich nicht ohne weiteres an Gegenständen fangen können und beschädigt werden können.

Es ist ebenfalls vorgesehen die flachgelegten Schlaufen mittels eines Haftbandes an dem textilen Flächengebilde zu befestigen. Das Klebeband kann dabei so ausgelegt werden, dass es seine Festigkeit bereits deutlich unterhalb der Intumeszenztemperatur verliert, und so einem aufquellen der Intumeszenzschicht keinen nennenswerten Widerstand entgegensetzt. Es ist ebenfalls möglich ein Nähwerk einzusetzen, dass mit zwei Nadeln eine sogenannte 3-Faden-Overlocknaht herstellt, wobei ein Oberfaden aus einem nicht temperaturbeständigen Garn und der andere Oberfaden, sowie der gemeinsame Unterfaden aus einem temperaturbeständigen Garn bestehen. Um die bisher gewünschten Abmessungen erreichen zu können muss die erfindungsgemäße Nähmaschine in einer Ausführungsform eine Overlocknaht mit einer Breite von 20 bis 60, bevorzugt 30 bis 50 und weiter bevorzugt zwischen 35 und 45 mm herstellen können. So breite Overlocknähte sind mit den bisherigen Nähmaschinen nicht zu erreichen.

Ein Vorteil der vorliegenden Erfindung ist, dass Feuerschutzvorhänge allgemein flexibler und leichter sind als z.B. Brandschutztüren. Ein weiterer Vorteil besteht darin, dass ein derartiger Abschluss sehr kompakt verwahrt und überall angewendet werden kann. Noch ein anderer Vorteil ist, dass ein derartiger Feuerschutzvorhang mit dem erfindungsgemäßen Mehrschichtaufbau einfach herzustellen ist und dass ein Feuerschutzvorhang durch die erhaltene Anschwellung des intumeszierenden Materials, sehr gute isolierende Eigenschaften besitzt.

Der Vorhang der vorliegenden Erfindung ist durch den flexiblen Modulaufbau nach Belieben aufrollbar oder zusammenfaltbar, so dass er in einer kompakten Form oberhalb eines Tors oder anderen Öffnungen in einer Wand oder Mauer zum Abschluss der oben genannten Öffnung herabgelassen werden kann und so im Falle eines Brandes, eine Barriere gegen das Überschlagen des Feuers durch die genannte Öffnung gebildet wird. Auch kann ein großer Raum durch erfindungsgemäße Brandschutzvorhänge im Brandfall schnell in Bereiche unterteilt werden, was durch starre Brandschutzgebilde nur sehr umständlich möglich ist.

Im Rahmen der vorliegenden Erfindung wird unter intumeszierendes Material jedwedes Material verstanden, das sich unter Hitzeeinwirkung aufbläht. So ein thermisch expandierendes Material ist damit insbesondere so beschaffen, dass es eine irreversible Volumenzunahme unter Hitzeeinwirkung zeigt. Beispiele hierfür sind Blähgraphit oder Blähglimmer, jedoch wird der Fachmann je nach Anforderung ein geeignetes intumeszierendes Material wählen, so dass die spezielle Art des intumeszierenden Materials hier nicht beschränkt sein sollte.

Im Kontext der vorliegenden Erfindung ist mit dem Begriff "temperaturfest" oder "temperaturbeständig" die Eigenschaft eines Materials gemeint, die anzeigt, dass die mechanischen Eigenschaften des Materials bis zu einer bestimmten Temperatur im Wesentlichen vollständig erhalten bleiben. Oberhalb dieser bestimmten Temperatur kann es zum teilweisen oder vollständigen strukturellen Versagen des Materials kommen, z.B. durch Schmelzen oder Oxidation.

Bevorzugt ist auch, dass zumindest eines des ersten textilen Flächengebildes und des zweiten textilen Flächengebildes als Isolationslage ausgebildet ist. Besonders bevorzugt ist, dass die Isolationslage "außen", d.h. in Richtung des Brands ausgerichtet ist. So wird die Dauer bis zur Ausdehnung des intumeszierenden Materials verzögert und die Brandschutzwirkung verbessert. Es ist ebenfalls möglich die Isolationslage so zu wählen, dass bei einer Temperaturdifferenz zwischen einer in der Einsatzanordnung dem Brand zugewandten Brandseite und einer dem Brand abgewandten Seite über die Isolationslage eine größere Temperaturdifferenz abfällt als über das thermisch expandierende Material. So wird sichergestellt, dass sich Brandwärme im thermisch expandierenden Material staut und das Expandieren des Materials fördert. Insbesondere ist in diesem Fall der Wärmedurchgangskoeffizient der Isolationslage kleiner als der Wärmedurchgangskoeffizient des thermisch expandierenden Materials.

Günstig ist es, wenn die Isolationslage einen Vliesstoff umfasst. Vliesstoffe sind flexibel, leicht und haben trotzdem eine hohe Isolationswirkung. Bevorzugte Vliesstoffe umfassen künstliche mineralische Fasern, Aramidfasern, thermoplastische Fasern bzw. hochtemperaturthermoplastische Fasern, Fasern aus thermisch behandelten Thermoplasten, sowie Glas- oder Steinwollefasern.

Vorteilhaft ist zudem, wenn das intumeszierende Material endotherm wirksam ist, wodurch Brandwärme absorbiert und vom Vorhang auf der dem Brand abgewandten Seite abgestrahlte Wärme vermindert wird.

Im Folgenden wird die vorliegende Erfindung anhand von Figuren beispielhafter Ausführungsformen beschrieben. Die in den Figuren dargestellten Ausführungen sind dabei lediglich schematisch und nicht Maßstabsgerecht. Sowohl in den Figuren als auch in der Beschreibung werden gleiche oder ähnliche Bezugszeichen verwendet um auf gleiche oder ähnliche Komponenten oder Elemente Bezug zu nehmen.

### Kurze Beschreibung der Figuren

Figuren 1A bis 1C zeigen eine Ausführungsform eines erfindungsgemäßen Mehrschichtaufbaus.
Figuren 2A bis 2C zeigen eine weitere Ausführungsform eines erfindungsgemäßen Mehrschichtaufbaus.
Figur 3 stellt eine zusätzliche Ausführungsform eines erfindungsgemäßen Mehrschichtaufbaus dar.
Figur 4 zeigt eine andere Ausführungsform eines erfindungsgemäßen Mehrschichtaufbaus.
Figur 5 zeigt eine andere Ausführungsform eines erfindungsgemäßen Mehrschichtaufbaus, sowie Teile eines Verfahrens und einer Vorrichtung zu dessen Herstellung dar.
Figur 6 stellt eine weitere Ausführungsform eines erfindungsgemäßen Mehrschichtaufbaus, sowie ein Verfahren und eine Vorrichtung zu dessen Herstellung dar.
Figuren 7A bis 7C zeigen ein Modul eines erfindungsgemäßen Mehrschichtaufbaus, das Verfahren um daraus einen durchgehenden Feuerschutzvorhang (FSV) herzustellen.
Figur 8 stellt ein Ablaufdiagramm für ein Verfahren zur Herstellung eines erfindungsgemäßen Mehrschichtaufbaus dar.
Figur 9 zeigt einen Querschnitt durch einen Feuerschutzvorhang gemäß dem Stand der Technik.
Fig. 10 zeigt einen Querschnitt durch einen Feuerschutzvorhang mit einem Mehrschichtaufbau gemäß einer Ausführungsform der vorliegenden Erfindung.
Fig. 11 zeigt ein Diagramm des Temperaturverlaufs an der Kaltseite eines erfindungsgemäßen Mehrschichtaufbaus während eines Versuchs.
Fig.12 zeigt Bilder einer Wärmebildkamera eines erfindungsgemäßen Feuerschutzvorhangs im Vergleich mit einem herkömmlichen Feuerschutzvorhang in gleichmäßigen Zeitabständen über insgesamt 30 Minuten aufgenommen.

### Detaillierte Beschreibung der Figuren

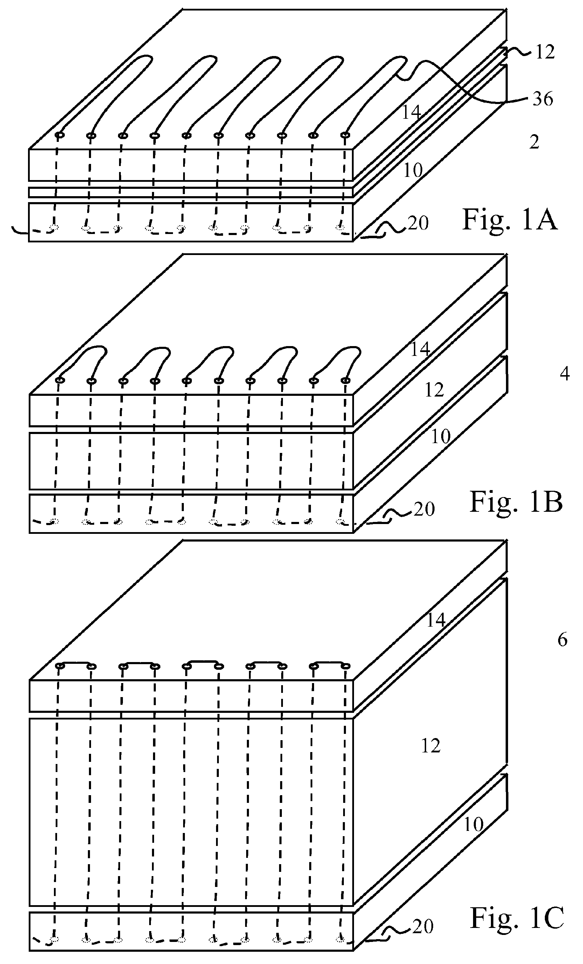

Figur 1A stellt einen erfindungsgemäßen feuerhemmenden Mehrschichtaufbau 2 dar. Der Mehrschichtaufbau 2 umfasst dabei ein erstes textiles Flächengebilde 10, das bis mindestens 800°C temperaturfest ist, und das beispielsweise als Glas- und/oder Mineralfaservlies ausgeführt sein kann. Weiterhin umfasst der Mehrschichtaufbau 2 ein zweites textiles Flächengebilde 14, das als tragfähiges textiles Flächengebilde ausgeführt sein kann wie ein Glas-und/oder Mineralstoffgewebe, das mit Draht oder einer Trägerlage versehen sein kann. Zwischen dem ersten und dem zweiten textilem Flächengebilde 10, 14 ist eine erste Schicht 12 angeordnet, die ein intumeszierendes Material umfasst. Die Schichten bzw. das erste und das zweite textile Flächengebilde 10, 14 und die dazwischenliegende Schicht 12 sind durch eine Verbindung mit einem ersten Verbindungsfaden 20, der bis mindestens 800°C temperaturfest ist, miteinander verbunden. Bei der mindestens einen Verbindung ist der erste Verbindungsfaden 20 in jeweils mindestens eine Schlaufe 36 gelegt, die eine Fadenreserve bildet. Im Zusammenhang der vorliegenden Erfindung ist die temperaturfest "Verbindung" mit dem ersten Verbindungsfaden 20 insofern auszulegen, als dass die Verbindung eine Fadenreserve bereitstellt. Dies kann durch eine durchgehende Vernähung/Naht geschehen oder durch einzelne, in einer Reihe oder punktuell verteilte Schlaufen des ersten Fadens 20, die auf geeignete Weise geschlossen sind, z.B. durch Knoten, Haken, punktuelles Aufschmelzen, etc. In einer einfachen Ausführung umfasst die Verbindung ein einzelnes Drahtsegment, das durch die Schichten gesteckt und an den Enden umgebogen bzw. plattgedrückt ist.

Wenn sich das intumeszierende Material der ersten Schicht 12 unter Temperatureinwirkung ausdehnt, bieten die Schlaufen dem intumeszierenden Material genug Raum, um sich ausdehnen zu können. Die mindestens eine Verbindung ermöglicht dabei einen Höchstabstand zwischen dem ersten und dem zweiten textilen Flächengebilde im Bereich der Verbindung auf mindestens das Fünffache der Dicke der ersten Schicht festlegt. Beispielsweise kann das erste textile Flächengebilde aus einem Glas- und/oder Mineralfaservlies hergestellt sein, das eine Dicke zwischen 0,2 und 3 cm, bevorzugt 0,4 und 2 cm und noch bevorzugter 0,5 und 1 cm aufweist.

Das zweite textile Flächengebilde kann aus einem Glas- und/oder Mineralfasergewebe hergestellt sein, in dem Verstärkungsfäden aus Draht eingewebt sind, um eine ausreichende Tragfähigkeit des Mehrschichtaufbaus 2 zu ermöglichen. Das zweite textile Flächengebilde 14 kann dabei eine Dicke von 0,5 bis 5mm, bevorzugt 1 bis 2mm aufweisen, je nach Anwendungsfall. Die erste Schicht mit dem intumeszierende Material 12 kann eine Dicke von 0,7 bis 3mm aufweisen, und sich auf über 4cm ausdehnen. Die Verbindung bzw. die Schlaufen 36 sollen es dabei ermöglichen, dass sich die erste Schicht auf 10mm bis 60mm, bevorzugt auf 35 bis 45mm ausdehnt, um eine verbesserte Feuerschutzwirkung zu erhalten. Die Wirkung der Verbindung besteht dabei darin, dass die Ausdehnung der intumeszierenden Schicht 12 begrenzt wird, sodass das intumeszierte Material zwischen den textilen Flächengebilden 10, 14 eingeklemmt ist, wodurch ein Herabrieseln des intumeszierenden Materials in dem Hohlraum zwischen den textilen Flächengebilden 10, 14 verhindert wird.

In Figur 1B ist der feuerhemmende Mehrschichtaufbau 2 der Figur 1A während einer Ausdehnungsfase der ersten Schicht 12 dargestellt, wobei der in die Schlaufen gelegte Faden 20 zwischen die textilen Flächengebilde 10, 14 eingezogen wird. In Figur 1C hat sich die erste Schicht 12 vollständig ausgedehnt und der feuerhemmende Mehrschichtaufbau 2 hat seine endgültige Dicke erreicht. Der Faden 20 hat sich vollständig an die textilen Flächengebilde 10, 14 angelegt und hält das ausgedehnte intumeszierende Material an Ort und Stelle. Es sei angemerkt, dass durch den Druck der Verbindung auf das sich ausdehnende Material der ersten Schicht an dem ersten und zweiten textilen Flächengebilde Einschnürungen entstehen können. Diese sind in Fig.1C jedoch nicht dargestellt.

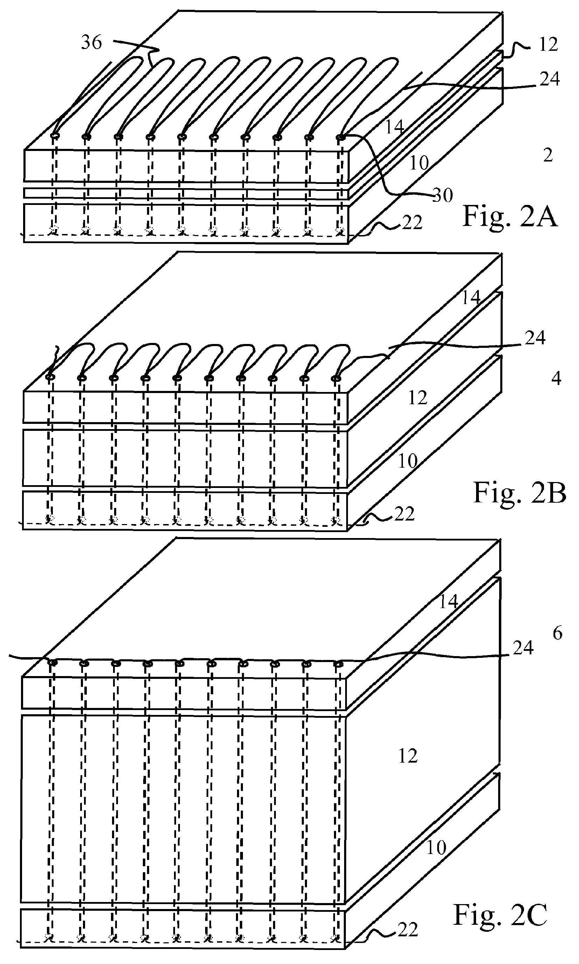

Figuren 2A bis 2C entsprechen im Wesentlichen den Figuren 1A bis 1C, wobei die Naht, die die Verbindung bildet, als Steppnaht mit einem ersten Oberfaden 24 und einem ersten Unterfaden 22 ausgebildet ist. Diese Naht kann durch ein Nähen mit einem Fadengreifer oder einem Abstandshalter hergestellt werden, wobei der Fadengreifer nach jedem Stich ein Teil des Oberfadens abzieht und z.B. zur Seite ablegt. Diese Konstruktion weist den Nachteil auf, dass sich die Fäden an Gegenständen fangen können, wodurch die Naht zerstört werden könnte. Anstelle der Steppnaht 30 kann auch eine einfache Kettennaht oder eine Zweifaden-Kettennaht eingesetzt werden. Jedoch sollte die vorliegende Erfindung nicht auf eine spezielle Verbindungsform eingeschränkt werden, da dem Fachmann viele alternative Verbindungsformen geläufig sind. In den Figuren 2B und 2C ist der feuerhemmende Mehrschichtaufbau 2 beim Ausdehnen der intumeszierenden Schicht 12 und mit voll ausgedehnter intumeszierender Schicht 12 dargestellt.

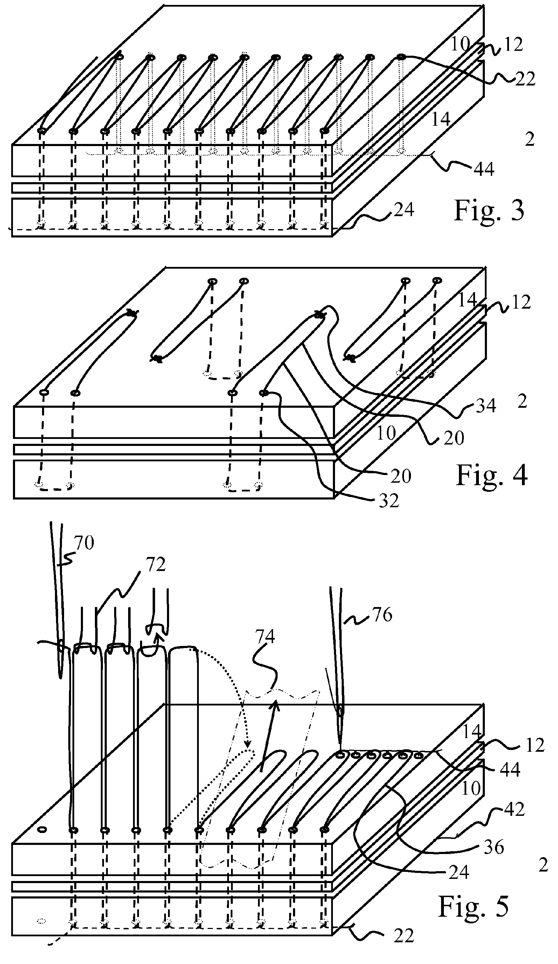

Figur 3 stellt eine zusätzliche Ausführungsform eines erfindungsgemäßen Mehrschichtaufbaus dar, bei dem eine Drei-Faden-Overlocknaht verwendet wird. Im Gegensatz zu den Ausführungsformen der Figuren 1A bis 2C ist hier der erste hitzebeständige Unterfaden 22 in Schlaufen 36 gelegt. Als erster Unterfaden 22, bzw. als erster Verbindungfaden, der als Unterfaden 22 ausgeführt ist, und als erster Oberfaden 24, bzw. als erster Verbindungsfaden, 20, der als Oberfaden 24 ausgeführt ist, dient hier ein hitzebeständiger Faden. Der zweite Oberfaden 44 bzw. der zweite Verbindungsfaden 20 der als zweiter Oberfaden 44 verwendet wird, ist ein nicht-hitzebeständiger Faden, der im Brandfall so stark seine Festigkeit verliert, dass er nicht mehr in der Lage ist den ersten Unterfaden 22 zu halten. Nachdem der zweite Oberfaden 44 nach Hitzeeinwirkung den ersten Unterfaden 24 nicht mehr halten kann, liegt im Wesentlichen die Situation der Figuren 2A bis 2C vor. Da der zweite Oberfaden 44 an beiden Seiten des Mehrschichtaufbaus 2 an die Oberfläche tritt, spielt es keine Rolle welche Seite des Mehrschichtaufbaus 2 dem Feuer bzw. dem Brandherd zugewandt ist. Sobald eine Seite erwärmt wird, versagt der zweite Oberfaden 44 und der in Schlaufen gelegte erste Unterfaden 22 kann durch den ersten Oberfaden 24 in den Mehrschichtaufbau 2 gezogen werden, während sich die erste Schicht 12 ausdehnt. Im Brandfall kann der erste Unterfaden 22 durch die sich ausdehnende intumeszierende Schicht 12 in den Mehrschichtaufbau 2 gezogen werden, und so die ausgedehnte intumeszierende Schicht 12 stabilisieren.

Figur 4 zeigt eine andere Ausführungsform eines erfindungsgemäßen Mehrschichtaufbaus 5, bei dem anstelle einer durchgehenden Stepp-, Overlock- oder Kettennaht einzelne Verbindungen als einzelne Schlaufen ausgeführt sind. Bei solchen Schlaufen wird der Faden zu einer Schlaufe genäht, ein freies Ende des ersten Fadens mit einem anderen Teil des Fadens verbunden, z.B. verknotet oder mit einer Scheibe gesichert, und dann der Faden hinter dem Knoten bzw. der Verbindung durchtrennt. Solche Schlaufen bilden damit einzelne geschlossene Garn- bzw. Fadenschleifen, die es gestatten die Anzahl der Durchgänge des ersten Fadens zu minimieren. Die so gefertigten Schlaufen ermöglichen es die Verbindungen mit einem minimalen Einsatz von Material und insbesondere mit einem minimalen Einsatz von hitzebeständigem Faden auszuführen. Die Verbindungen bilden, sofern ein günstiges, metalldrahtbasiertes Fadenmaterial verwendet wird, jeweils kleinere Thermobrücken durch den Mehrschichtaufbau 2. Indem die Anzahl der Thermobrücken verringert wird, kann auch die Widerstandsfähigkeit des Mehrschichtaufbaus 2 verbessert werden. Zur zusätzlichen Absicherung gegen Wärmebrücken, kann eine wärmebeständige Deckschicht auf dem Mehrschichtaufbau bzw. dem Modul bzw. dem Feuerschutzvorhang der vorliegenden Erfindung vorgesehen sein.

Figur 5 zeigt eine andere Ausführungsform eines erfindungsgemäßen Mehrschichtaufbaus, sowie ein Verfahren und eine Vorrichtung zu dessen Herstellung. Der Aufbau des Mehrschichtaufbaus 2 aus erstem und zweitem textilen Flächengebilde 10, 14 und einer zwischenliegenden ersten intumeszierenden Schicht 12 entspricht dem der Figuren 1A bis 4. In Figur 5 ist an der linken Seite ein erstes Nähwerk 70 bzw. ein Nähwerk für den ersten Faden 70 durch eine Nadel dargestellt, die eine gewöhnliche Steppnaht erzeugt, wobei ein Abstandshalte-/Fadengreifvorrichtung 72 vorgesehen ist, um definierte Schlaufen der ersten Naht zu erzeugen.

Die Abstandshalte-/Fadengreifvorrichtung 72 ist hier als eine Kette von Haken ausgeführt, über die der erste Faden geführt wird, wobei jeder der Haken die Schlaufe 36 freigibt, sobald die Naht ausreichend fixiert ist, sodass das erste Nähwerk 70 die Schlaufen 36 beim Nähen nicht mehr zusammenziehen kann. Alternativ kann der Haken auch umklappen oder die Schlaufe mittels einer Vorrichtung des Hakens aus dem Haken herausgehoben werden. Damit wird im Wesentlichen eine Naht hergestellt wie sie in den Figuren 2A bis 2C dargestellt ist. In einem nächsten Schritt werden die Schlaufen 36 durch eine Schlaufenlegevorrichtung 74 flachgelegt, sodass sie im Wesentlichen auf dem ersten oder dem zweiten textilen Flächengebilde 10, 14 des Mehrschichtaufbaus 2 aufliegen. Die Schlaufenlegevorrichtung 74 kann als Blech ausgeführt sein, das seitlich gegen die aus dem Mehrschichtaufbau 2 ragenden Fäden drückt um sie flachzulegen, oder kann als Bürste ausgeführt sein, die die Schlaufen flachstreicht, oder kann wie dargestellt ein Band umfassen, das die Schlaufen wie ein Fließband seitlich flachlegt.

Ein zweites Nähwerk 76 bzw. ein Nähwerk für den zweiten Faden 76 verwendet einen nicht-temperaturfesten Faden um die Schlaufen an dem Mehrschichtaufbau 2 zu befestigen, sodass sie gegen Beschädigungen geschützt sind. Weiterhin verbindet das zweite Nähwerk 76 die einzelnen Schichten bzw. das erste und das zweite textile Flächengebilde 10, 14 und die erste intumeszierende Schicht 12 z.B. durch eine Steppnaht, die im Brandfall zerstört wird, sodass sich einerseits die erste Schicht 12 ausdehnen kann, ohne durch den zweiten Faden behindert zu werden und andererseits die Schlaufen der ersten Naht bzw. des ersten (Ober-) Fadens 24 freigegeben werden, sodass ein definierter Abstand zwischen dem ersten und dem zweiten textile Flächengebilde 10, 14 erreicht werden kann. Nachdem im Brandfall die zweite Naht wegfällt, liegt im Wesentlichen der Fall vor, der in den Figuren 2A bis 2C hinlänglich beschrieben ist.

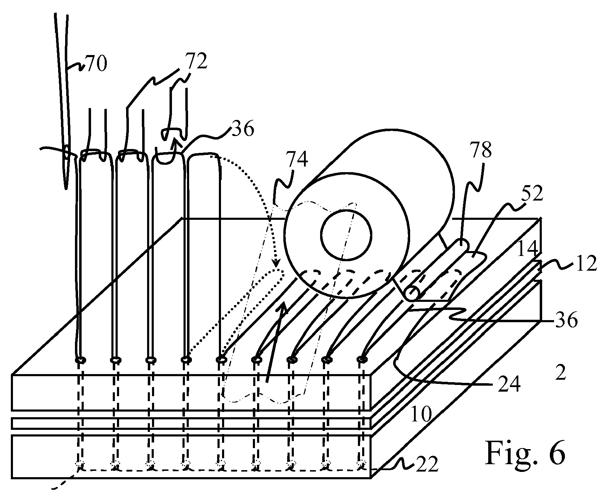

Figur 6 stellt eine weitere Ausführungsform eines erfindungsgemäßen Mehrschichtaufbaus, sowie ein Verfahren und eine Vorrichtung zu dessen Herstellung dar. Anstelle des zweiten Nähwerks wird der in Schlaufen 36 gelegte Oberfaden 24 nach dem Flachlegen durch die Schlaufenlegevorrichtung 74 mit einem Klebeband 52 an dem ersten oder zweiten textilen Flächengebilde 10, 14 fixiert. Das Klebeband 52 wird dabei durch einen Klebebandabroller bzw. eine Klebebandabrollvorrichtung 78 auf dem ersten oder zweiten textilen Flächengebilde 10, 14 angebracht. Das Klebeband kann so ausgelegt werden, dass des die Schlaufen lediglich auf der gesamten Breite abdeckt, und so gegen eine Beschädigung schützt, wobei ein breiteres Klebeband verwendet wird, das den gesamten Faden abdeckt und nur an dessen Rändern mit einer Klebeschicht versehen ist. Es ist ebenfalls möglich eine relativ schwache Klebeschicht zu verwenden, die dem Faden keinen wesentlichen Widerstand entgegensetzt. Um die Schichten gegeneinander zu fixieren, kann die erste Schicht beispielsweise auf dem zweiten Flächengebilde aufgebracht sein, bzw. das zweite textile Flächengebilde 10 kann mit der intumeszierenden Schicht 12 beschichtet sein, und das erste textile Flächengebilde kann durch eine Klebeschicht mit der intumeszierenden Schicht 12 verbunden werden. Dies ergibt ein Ausgangsmaterial, das in einem nicht-ausgedehnten Zustand keinerlei Nähte oder Fasen benötigt, die textilen Flächengebilde miteinander verbindet.

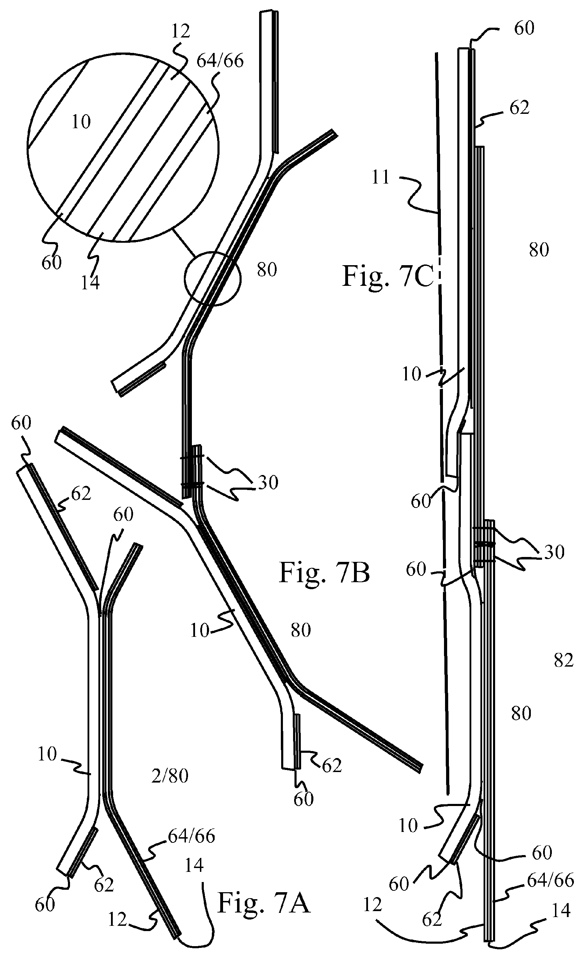

Figuren 7A bis 7C zeigen ein Modul 80 eines erfindungsgemäßen Mehrschichtaufbaus 2 und das Verfahren, um daraus einen durchgehenden Flammenschutzvorhang 82 herzustellen. In Figur 7A ist ein Modul 80 dargestellt. Das Modul 80 kann jeweils durch Zusammennähen der zweiten tragfähigen textilen Flächengebilde 14 miteinander zu größeren und breiteren Feuerschutzvorhängen zusammengesetzt werden. Das Modul weist dabei einen feuerhemmenden Mehrschichtaufbau auf wie er vorstehen beschrieben wurde. Der Übersichtlichkeit halber wurden die Nähte und Verbindungen mit dem ersten Faden weggelassen.

In dem Modul ist die erste Schicht auf dem ersten oder dem zweiten textilen Flächengebilde aufgebracht. In der dargestellten Version ist die erste Schicht 12 auf dem zweiten textilen Flächengebilde in Form einer Beschichtung aufgebracht. Das erste und das zweite textile Flächengebilde weisen im Wesentlichen eine gleiche Breite auf. Das erste und das zweite textile Flächengebilde 10, 14 sind in der dargestellten Ausführung versetzt zueinander angeordnet. Es ist jedoch ebenfalls möglich die beiden textilen Flächengebilde direkt aufeinanderzulegen. Zwischen dem ersten textilen Flächengebilde 10 und der intumeszierenden Schicht 12 ist eine Klebeschicht 60 angeordnet, die die Schichten des Mehrschichtaufbaus 2 miteinander verbindet. Die Klebeschicht 60 ist dabei auf dem ersten textilen Flächengebilde aufgebracht und im Randbereich jeweils mit Abdeckstreifen versehen. Damit sind die textilen Flächengebilde im Randbereich nicht miteinander verbunden. Zwischen den Randbereichen verklebt die Klebeschicht 60 das erste textile Flächengebilde mit der ersten Schicht 12. Optional ist das zweite textile Flächengebilde 14 an der Außenseite mit einer Aluminiumfolie oder einer Aluminiumbeschichtung 64 versehen und kann zudem mit einer Strahlungsisolationsschicht 66 versehen sein.

In Figur 7B sind die zweiten textilen Flächengebilde 14 zweier benachbarter Module durch Steppnähte 30 mit einem temperaturbeständigen Faden bzw. Garn miteinander überlappend verbunden. Diese Naht umfasst keine Fadenreserve oder in Schlaufen gelegte Fadenabschnitte. Diese Naht ist lediglich dazu vorgesehen die einzelnen Module, die als Meterware mit einer gewissen Breite bereitgestellt werden, zu einem größeren Feuerschutzvorhang zusammenzufügen. Die Steppnaht 30 dient hier als stabile Verbindung. Die Verbindungen oder die Abstandsnähte mit den Schlaufen aus den anderen Figuren sind hier der Übersichtlichkeit halber nicht dargestellt. Figur 7B stellt lediglich eine stabile Verbindung der zweiten Lagen und damit der Module selbst dar. In Figur 7B ist eine Detailvergrößerung des Schichtaufbaus des erfindungsgemäßen Moduls dargestellt. Weiterhin können aus den dargestellten Modulen Feuerschutzvorhänge hergestellt werden, indem jeweils zwei Module bzw. zusammengenähte Module mit den zweiten Seiten zusammengelegt werden. Es ist ebenfalls allgemein möglich den Schichtaufbau durch weitere Folien, Metallfolien oder textile Flächengebilde wie Vliese oder Gewebe zu verändern, ohne den Schutzbereich zu verlassen der durch die Ansprüche definiert ist.

In Figur 7C wurden die Abdeckstreifen 62 der Klebeschichten 60 entfernt die auf dem ersten textilen Flächengebilde aufgebracht sind. Danach wurde nacheinander das erste textile Flächengebilde bzw. deren Randbereiche überlappend an das zweite textile Flächengebilde (bzw. die erste Schicht 12) angeklebt. Durch diesen Aufbau überlappen die ersten Flächengebilde die Steppnaht 30, die die zweiten textilen Flächengebilde miteinander verbindet. Da das erste textile Flächengebilde als leichtes Vlies ausgeführt werden kann, das keine tragenden Aufgaben übernehmen muss kann die überlappende Verklebung der ersten textilen Flächengebilde 10 auch im Brandfall ausreichend sein, um eine sichere Verbindung und Funktion des fertigen Brandschutzvorhangs zu gewährleisten. Der Überstand des Vlieses kann zur Verbesserung der Rollbarkeit auch entfernt, z.B. abgeschnitten werden. Zusätzlich ist in Fig. 7C eine Deckschicht 11 dargestellt, wie sie bevorzugt nach der Verbindung der einzelnen Module hinzugefügt wird.

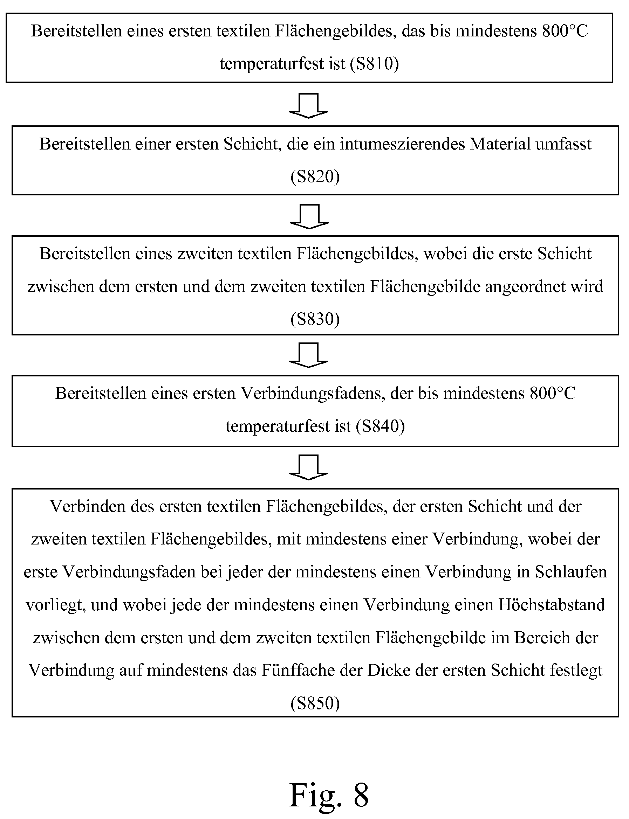

Figur 8 stellt ein Ablaufdiagramm für ein Verfahren zur Herstellung eines erfindungsgemäßen Mehrschichtaufbaus dar.

In einem ersten Schritt S810 wird ein erstes textilen Flächengebildes bereitgestellt, das bis mindestens 800°C temperaturfest ist.

In einem zweiten Schritt S820 wird eine ersten Schicht bereitgestellt, die ein intumeszierendes Material umfasst.

In einem dritten Schritt S830 wird ein zweite textile Flächengebilde bereitgestellt, wobei die erste Schicht zwischen dem ersten und dem zweiten textilen Flächengebilde angeordnet wird.

In einem vierten Schritt S840 wird ein erster Verbindungsfaden bereitgestellt, der bis mindestens 800°C temperaturfest ist.

In einem vierten Schritt S850 wird das erste textile Flächengebilde, die erste Schicht und das zweite textile Flächengebilde, mit mindestens einer Verbindung miteinander verbunden, wobei der erste Verbindungsfaden bei jeder der mindestens einen Verbindung in Schlaufen vorliegt, bzw. in Schlaufen gelegt wird, die eine Fadenreserve bilden, wobei jede der mindestens einen Verbindung einen Höchstabstand zwischen dem ersten und dem zweiten textilen Flächengebilde im Bereich der Verbindung auf mindestens das Fünffache der Dicke der ersten Schicht festlegt.

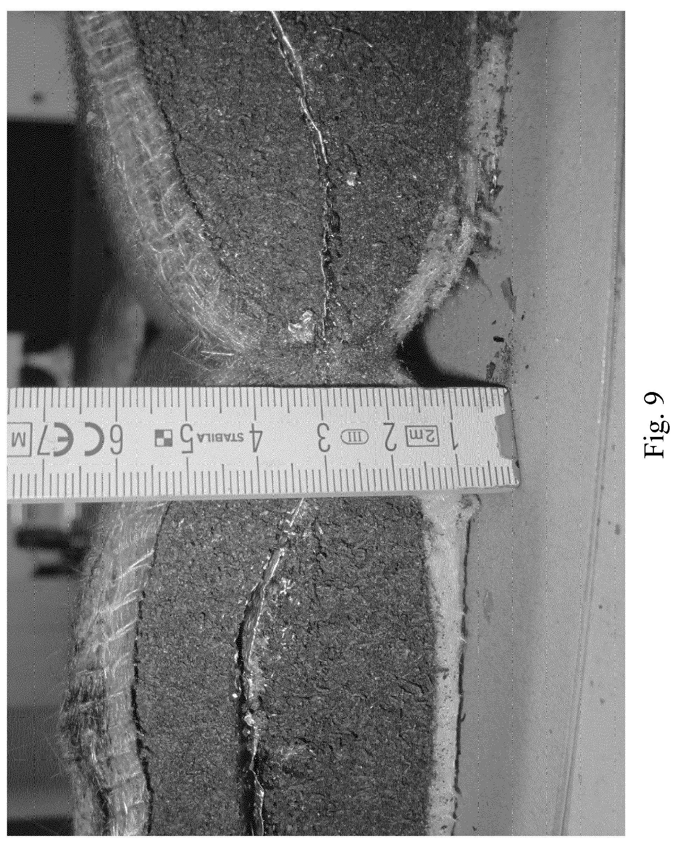

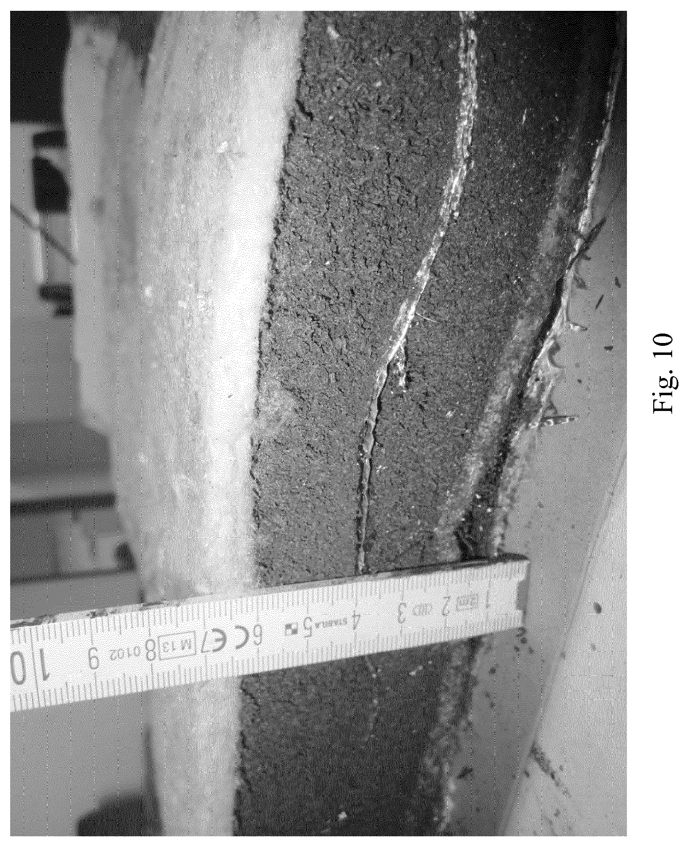

Fig. 9 und 10 sind Abbildungen, die einen Feuerschutzvorhang zeigen nachdem sich die intumeszierende Schicht ausgedehnt hat. Fig. 9 zeigt dabei einen Feuerschutzvorhang, wie er im Stand der Technik bekannt ist. Wie deutlich zu erkennen ist, ist der Abstand durch die direkt aufeinanderliegende Verbindung der Außenschichten im Bereich der Naht auf ca. 1,5 cm eingeschränkt. In diesem Bereich kann es daher leicht zu starken Wärmebrücken kommen, die die Schutzwirkung des Feuerschutzvorhangs beeinträchtigen. Im Gegensatz dazu zeigt Fig. 10 eine Abbildung eines Feuerschutzvorhangs gemäß der vorliegenden Erfindung nachdem sich die intumeszierende Schicht ausgedehnt hat. Die Einschnürung im Bereich der Naht ist nach wie vor zu erkennen, ist jedoch auf mehr als 3,5 cm begrenzt. Daher sind im Bereich der Verbindung keine bzw. nur schwache Wärmebrücken vorhanden.

### Erfindungsgemäßes Ausführungsbeispiel

Materialaufbau für einen EI 30 Vorhang:
1. Deckgewebe AF300 mit aufkaschierter Aluminiumfolie 30µm; Aluminium nach innen
2. Glasvlies isoTHERM®1000 6mm
3. Glasgewebe mit V4A Draht 1-seitig Intum beschichtet / Intum nach außen
4. Aluminiumfolie 30µm
5. Glasgewebe mit V4A Draht 1-seitig Intum beschichtet / Intum nach außen Glasvlies isoTHERM®1000 6mm
6. Glasvlies isoTHERM®1000 6mm
7. Deckgewebe AF300 mit aufkaschierter Aluminiumfolie 30µm Aluminium nach innen

Die Materialien 2 bis 6 sind mit einer Kettenstichnaht verbunden, die eine freie Garnzugabe von 70mm aufweist. Abstand der horizontalen Nähte beträgt etwa 30cm. Das Nähgarn besteht aus einem Aramidgarn mit Edelstahldraht. Mit diesem Aufbau wird die Anforderung an einen EI30 Vorhang sicher erfüllt.

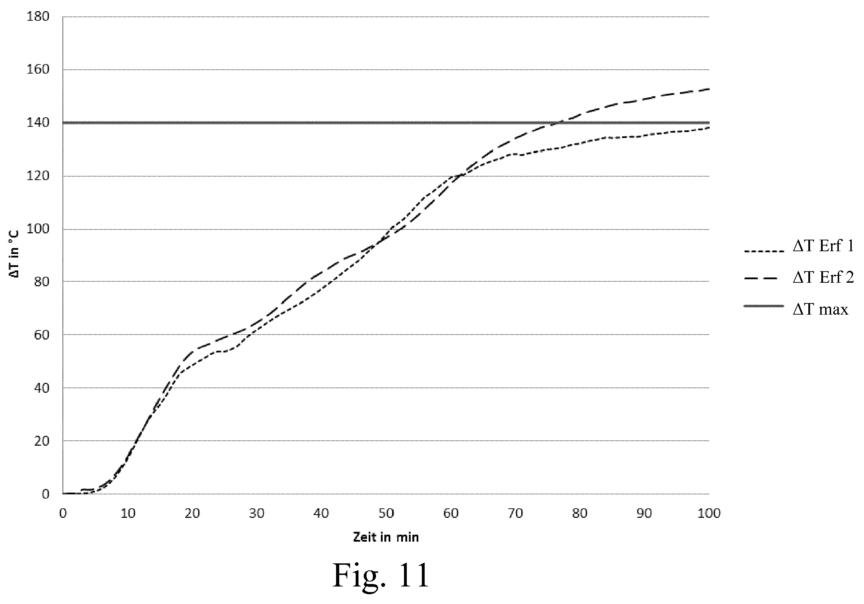

Fig. 11 zeigt eine Temperatur-Zeit-Kurve zweier Durchläufe Erf 1 und Erf 2 eines Versuchs gemäß den Anforderungen der Norm EI 30 bzw.60 der DIN EN 13501-2 bzw. 3. In diesem Beispiel wurde der folgende erfindungsgemäße Schichtaufbau verwendet. Materialaufbau von Kaltseite zur Heißseite:
1. Deckgewebe AF380 2/2 kaschiert mit Alufolie
2. Modul bestehend aus: isoTherm 800 Vlies und intumeszierendem Gewebe kaschiert mit Alufolie. Bei diesem erfindungsgemäßen Modul wird die Verbindung mit einem ersten Verbindungsfaden eingebracht, die im kalten Zustand keinerlei Funktion hat.
3. Modul wie 2.
4. Deckgewebe wie 1.
   Die Reihenfolge der Schichten im Versuchsaufbau war: Deckgewebe, Alufolie, Vlies, Intumgewebe (Blähgraphit); Alufolie; Alufolie, Intumgewebe, Vlies, Alufolie, Deckgewebe. Die intumeszierende Schicht zeigt in der Regel zum Vlies.

Die intumeszierende Schicht wies eine Blähhöhe von ca. 45 mm je Seite auf. Dies entspricht ca. einer 30 fachen Vergrößerung der Schichtdicke. Die Starttemperatur des Blähvorgangs der verwendeten intumeszierenden Schicht betrug 160 °C.

ΔT Erf 1 und 2 stellen in Fig. 11 den Verlauf für den erfindungsgemäßen Aufbau dar. ΔT max ist die zugelassene Höchsttemperatur für Norm EI 30 bzw.60 der DIN EN 13501-2 bzw. 3. Die Temperatur wurde Normgemäß an fünf mittleren Positionen an der Außenseite des Schutzvorhangs gemessen. Die Temperatur an der "Heißsseite" des Versuchsaufbaus betrug nach 30 Minuten ca. 860°C, nach 60 Minuten ca. 950°C und nach 90 Minuten ca. 1020°C.

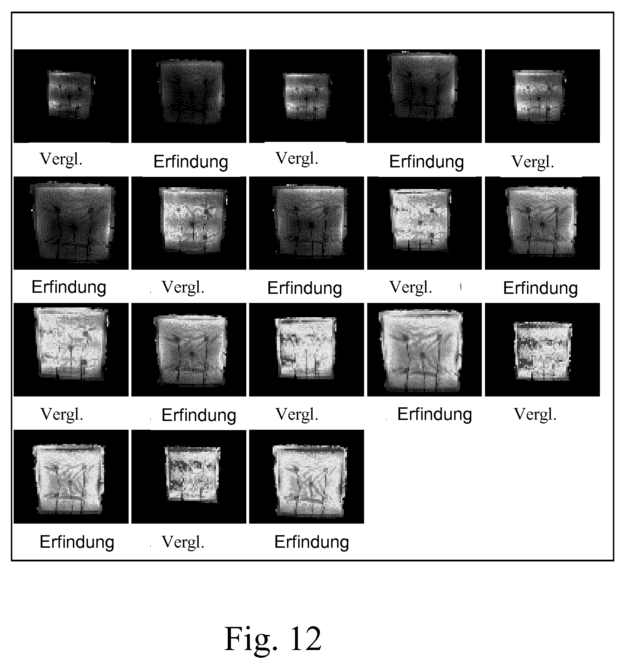

In Fig. 12 sind Wärmebildaufnahmen eines erfindungsgemäßen Feuerschutzvorhangs gemäß dem Anwendungsbeispiel und einem herkömmlichen Feuerschutzvorhangs mit einer herkömmlichen Verbindung einzelner Kissen mit intumeszierendem Material gezeigt. Der Versuchsaufbau entspricht dem der Feuerschutznorm DIN EN 13501-2 bzw. 3 für nicht tragende Innenwände.

Wie deutlich erkennbar ist, bilden sich bei dem Vergleichsvorhang "Vergl." sofort nach Beginn des Versuchs (oben links) Wärmebrücken, die sich schnell ausbreiten und die Feuerschutzfunktion des Vorhangs bereits zur Mitte des Versuchs stark eingeschränkt ist. Das erfindungsgemäße Beispiel "Erfindung" zeigt lediglich am Rand der Fläche gelbe bis rote Stellen, die lediglich von der Begrenzung des Versuchsaufbaus herrühren. Im Bereich der Nähte sind nur minimale Wärmebrücken zu erkennen. Da in abgeschwächter Form auch in der vorliegenden Erfindung Wärmebrücken auftreten können, ist in einer Ausführungsform eine zusätzliche Isolationsschicht auf den Außenseiten, d.h. den dem Feuer zugewandten Seiten, vorgesehen, die den direkten Wärmetransport an der Naht mit Reservoir hemmt. Ob eine solche zusätzliche Isolationsschicht nötig ist oder nicht, hängt stark von dem verwendeten Fadenmaterial und dessen Wärmeleitfähigkeit ab.

### Bezugszeichenliste

- 2: feuerhemmender Mehrschichtaufbau (mit Ausgangssituation)
- 4: feuerhemmender Mehrschichtaufbau (mit teilweise aufgeschäumter Schicht)
- 6.: feuerhemmender Mehrschichtaufbau (mit vollständig aufgeschäumter Schicht)
- 10: erstes textiles Flächengebilde
- 11: Deckschicht
- 12: erste Schicht
- 14: zweites textiles Flächengebilde
- 20: erster Verbindungsfaden
- 22: erster Verbindungsfaden (Unterfaden)
- 24: erster Verbindungsfaden (Oberfaden)
- 30: Steppnaht
- 32: Schlaufe mit geeignetem Ringschluss
- 34: Knoten
- 36: Schlaufe
- 40: zweiter Verbindungsfaden
- 42: zweiter Verbindungsfaden (Unterfaden)
- 44: zweiter Verbindungsaden (Oberfaden)
- 50: Fadenverbindung
- 52: Klebeband
- 60: Haftschicht
- 62: Abdeckschicht
- 64: Aluminiumfolie/-7beschichtung
- 66: Strahlungsisolationsschicht
- 70: Nähwerk für ersten Faden
- 72: Abstandshalte-/Fadengreifvorrichtung
- 74: Schlaufenlegevorrichtung
- 76: Nähwerk für den zweiten Faden
- 78: Klebebandabroller
- 80: Modul
- 82: Feuerschutzvorhang

## Patentansprüche

1. Feuerhemmender Mehrschichtaufbau (2), umfassend:
ein erstes textiles Flächengebilde (10), das bis mindestens 800°C temperaturfest ist;
eine erste Schicht (12), die ein intumeszierendes Material umfasst; und
ein zweites textiles Flächengebilde (14), wobei die erste Schicht (12) zwischen dem ersten und dem zweiten textilen Flächengebilde (10, 14) angeordnet ist, wobei der feuerhemmende Mehrschichtaufbau (2) weiterhin umfasst:
mindestens eine temperaturbeständige Verbindung mit einem ersten Verbindungsfaden (20, 22, 24), der bis mindestens 800°C temperaturfest ist, der das erste textile Flächengebilde (10), die erste Schicht (12) und das zweite textile Flächengebilde (14) miteinander verbindet, wobei die mindestens eine temperaturbeständige Verbindung den ersten Verbindungsfaden (20, 22, 24) in jeweils mindestens eine Schlaufe (36) legt, und wobei die mindestens eine temperaturbeständige Verbindung einen Höchstabstand zwischen dem ersten und dem zweiten textilen Flächengebilde (10, 14) im Bereich der temperaturbeständigen Verbindung auf mindestens das Fünffache der Dicke der ersten Schicht (12) festlegt.

2. Feuerhemmender Mehrschichtaufbau (2) gemäß Anspruch 1, wobei die erste Schicht (12) als eine Beschichtung auf einer Seite des ersten textilen Flächengebildes (10) und/oder des zweiten textilen Flächengebildes (14) bereitgestellt ist.

3. Feuerhemmender Mehrschichtaufbau (2) gemäß einem der vorstehenden Ansprüche, weiterhin wenigstens ein Befestigungselement umfassend, das das erste textile Flächengebilde (10), die erste Schicht (12) und das zweite textile Flächengebilde (14) miteinander verbindet.

4. Feuerhemmender Mehrschichtaufbau (2) gemäß Anspruch 3, wobei das Befestigungselement einen zweiten Verbindungsfaden (40, 42, 44) umfasst, der das erste textile Flächengebilde (10), die erste Schicht (12) und das zweite textile Flächengebilde (14) aufliegend miteinander verbindet, wobei der zweite Verbindungsfaden (40, 42, 44) eine Temperaturfestigkeit aufweist, die im Bereich der Intumeszenztemperatur des intumeszierenden Materials der ersten Schicht (12) liegt.

5. Feuerhemmender Mehrschichtaufbau (2) gemäß Anspruch 4, wobei die mindestens eine temperaturbeständige Verbindung eine erste Naht bildet, die das erste textile Flächengebilde (10), die erste Schicht (12) und das zweite textile Flächengebilde (14) verbindet, und der zweite Verbindungsfaden (40, 42, 44) eine zweite Naht bildet, die parallel zu der ersten Naht verläuft und die durch den ersten Verbindungsfaden (20, 22, 24) gebildeten Schlaufen (36) an dem Mehrschichtaufbau (2) befestigt.

6. Feuerhemmender Mehrschichtaufbau (2) gemäß Anspruch 4, wobei die mindestens eine temperaturbeständige Verbindung zusammen mit der zweiten Naht eine Verbundnaht bildet, wobei der zweite Verbindungsfaden (40, 42, 44) die Schlaufen (36) des ersten Verbindungsfadens (20, 22, 24) der mindestens einen temperaturbeständigen Verbindung festlegt.

7. Feuerhemmender Mehrschichtaufbau (2) gemäß einem der vorstehenden Ansprüche, wobei das Befestigungselement eine Haftschicht (60) umfasst, die zwischen wenigstens zwei benachbarte des ersten textilen Flächengebildes (10), der ersten Schicht (12) und des zweiten textilen Flächengebildes (14) eingefügt ist und diese miteinander verklebt.

8. Feuerhemmender Mehrschichtaufbau (2) gemäß einem der vorstehenden Ansprüche, wobei die mindestens eine temperaturbeständige Verbindung eine Naht bildet und die Schlaufen (36) des ersten Verbindungsfadens (20, 22, 24) durch ein Klebeband (52) an dem Mehrschichtaufbau (2) befestigt sind.

9. Feuerhemmender Mehrschichtaufbau (2) gemäß einem der vorstehenden Ansprüche, wobei das erste textile Flächengebilde (10) einen Vliesstoff mit Mineralfasern umfasst.

10. Feuerhemmender Mehrschichtaufbau (2) gemäß einem der vorstehenden Ansprüche, wobei Mehrschichtaufbau (2) zur Fertigung eines Feuerschutzvorhangs geeignet ist und das zweite textile Flächengebilde (14) ein reißfestes Gewebe ist, das geeignet ist, das Gewicht des Feuerschutzvorhangs bis zu einer Temperatur von mindestens 200°C zu tragen.

11. Feuerhemmender Mehrschichtaufbau (2) gemäß einem der vorstehenden Ansprüche, wobei der Mehrschichtaufbau (2) mindestens ein Drahtgeflecht oder ein Drahtgitter umfasst, das mit dem ersten textilen Flächengebilde (10), der ersten Schicht (12) und/oder dem zweiten textilen Flächengebilde (14) verbunden ist, oder darin eingearbeitet ist.

12. Feuerhemmender Mehrschichtaufbau (2) gemäß einem der vorstehenden Ansprüche, wobei jede der mindestens einen temperaturbeständigen Verbindung eine geschlossene Schlaufe (36) bildet.

13. Modul, das einen feuerhemmenden Mehrschichtaufbau (2) gemäß einem der vorstehenden Ansprüche aufweist, zur Herstellung von Feuerschutzvorhängen oder - Abschlüssen, wobei die erste Schicht (12) auf dem ersten oder dem zweiten textilen Flächengebilde (10, 14) aufgebracht ist, wobei das erste und das zweite textile Flächengebilde (10, 14) im Wesentlichen eine gleiche Breite aufweisen, wobei das erste und das zweite textile Flächengebilde (10, 14) versetzt zueinander angeordnet sind, und
wobei das zweite oder das erste textile Flächengebilde (10, 14), auf das die erste Schicht (12) nicht aufgebracht ist, eine Klebeschicht (60) aufweist, wobei die Klebeschicht (60) im Randbereich jeweils mit Abdeckstreifen versehen ist, und wobei die Klebeschicht (60) zwischen den Randbereichen mit der ersten Schicht (60) verklebt ist.

14. Feuerschutzvorhang, umfassend einen feuerhemmenden Mehrschichtaufbau (2) bzw. ein Modul gemäß einem der vorstehenden Ansprüche, wobei der Feuerschutzvorhang die Erfordernisse der Norm EI 30 der DIN EN 13501-2 bzw. 3 für nicht tragende Innenwände erfüllt.

15. Feuerhemmender Mehrschichtaufbau (2), Modul oder Feuerschutzvorhang gemäß einem der vorstehenden Ansprüche, wobei
mindestens eines von dem ersten und dem zweiten textilen Flächengebilde (10, 14) mindestens eines, ausgewählt aus der Gruppe, bestehend aus Glasfasergewebe, Kohlefasergewebe, Keramikfasergewebe, Siliziumfasergewebe, Polykarbonfasergewebe und Metallfasergewebe umfasst; und/oder wobei
mindestens eines von dem ersten und dem zweiten textilen Flächengebilde (10, 14) ein Vlies aufweist, umfassend mindestens ein Material, ausgewählt aus der Gruppe bestehend aus künstlichen mineralischen Fasern, Aramidfasern, thermoplastischen Fasern bzw. hochtemperaturthermoplastischen Fasern, Fasern aus thermisch behandelten Thermoplasten, sowie Glas- oder Steinwollefasern; und wobei
der erste Verbindungsfaden (20, 22, 24) einen Metalldraht, Aramidgarn oder einen Keramikfaden umfasst; und wobei
der zweite Verbindungsfaden (40, 42, 44) einen Wollfaden, Baumwollfaden oder Kunststofffaden umfasst; und wobei
das intumeszierende Material Blähgraphit umfasst.
